# EUROPEAN PATENT SPECIFICATION

(11) **EP 3 529 306 B1**
(45) Date of publication and mention of the grant of the patent: **29.06.2022**
(21) Application number: 17804969.8
(22) Date of filing: 17.10.2017
(51) Int. Cl.: C08K 7/14, C08L 67/02

(54) **FLAME-RETARDED POLYESTER COMPOSITIONS**
FLAMMGESCHÜTZTE POLYESTERZUSAMMENSETZUNGEN
COMPOSITIONS DE POLYESTER IGNIFUGÉES

(30) Priority: 18.10.2016 US 201662409399 P
(43) Date of publication of application: 28.08.2019
(73) Proprietor: Bromine Compounds Ltd., 8410101 Beer-Sheva (IL)
(72) Inventor: HIRSCHSOHN, Yaniv, 7666213 Rehovot (IL); EDEN, Eyal, 6082633 Shoham (IL); EPSHTEIN ASSOR, Yelena, 8468567 Beer-Sheva (IL); DICHTER, Shay, 8502500 Meitar (IL)
(74) Representative: Schiweck Weinzierl Koch Patentanwälte Partnerschaft mbB
(86) International application number: PCT/IL2017/051142
(87) International publication number: WO 2018/073818

(56) References cited:
- DE-T5-112006 001 824
- JP-B2- 3 353 478
- DATABASE CA [Online] CHEMICAL ABSTRACTS SERVICE, COLUMBUS, OHIO, US; YANG, YUEQIN ET AL: "Modified sepiolite used for polyethylene corrugated pipe material and its preparation method", XP002777436, retrieved from STN Database accession no. 161:682472 -& CN 104 119 596 A (HEFEI HE AN MACHINERY MANUFACTURING CO., LTD., PEOP. REP. CHINA) 29 October 2014 (2014-10-29)
- DATABASE CA [Online] CHEMICAL ABSTRACTS SERVICE, COLUMBUS, OHIO, US; KURISU, SHIZUKA ET AL: "Flame-resistant thermoplastic resin compositions", XP002777437, retrieved from STN Database accession no. 85:95242 -& JP S51 59946 A (TEIJIN, LTD., JAPAN) 25 May 1976 (1976-05-25)

## Description

Glass-fiber reinforced poly(1,4-butylene terephthalate), hereinafter abbreviated PBT/GF, is used in various insulating parts for electrical and electronic devices. The commonly used grades are generally reinforced with 30 wt% glass fibers based on the total weight of the composition (hereinafter abbreviated PBT/GF₃₀).

Many polymers in commercial use contain flame retardants to reduce their flammability and PBT/GF is no exception to this rule. PBT/GF, e.g., PBT/GF₃₀, is more difficult to flame retard than the non-reinforced polymer. The flammability characteristics of plastic materials are usually quantifiable according to a method specified by Underwriter Laboratories standard UL 94, where an open flame is applied to the lowermost edge of a vertically mounted test specimen made of the tested polymer formulation. The specimens used in the UL 94 test method vary in thickness (typical thicknesses are ~3.2 mm, ~1.6 mm, ~0.8 mm and ~0.4mm). During the test, various features of the flammability of the test specimens are recorded. Then, according to the classification requirements, the polymer formulation is assigned with either V-0, V-1 or V-2 rating at the measured thickness of the test specimen. Polymer formulation assigned with the V-0 rating is the less flammable. Furthermore, in the UL-94 burning test, the thinner the specimens are, the longer the burning time. Therefore, the requirements of UL 94 V-0 rating for thin PBT/GF₃₀ test specimens (e.g., 0.8 or 0.4 mm thick samples) are not easily met.

Metal salts of hypophosphorous acid, that is, metal hypophosphite, have been found to be effective flame retardants in polyesters, with the predominance of literature focusing on aluminum hypophosphite. In US 7,700,680 it was shown that aluminum hypophosphite, Al(H₂PO₂)₃, can be used in PBT/GF, in combination with melamine cyanurate. Yet, the experimental results reported in Table 2 of US 7,700,680 suggest that the aforementioned combination does not fulfill the requirements of UL 94 V-0 rating for thin PBT/GF₃₀ specimens (e.g., 0.8 mm or 0.4 mm). UL 94 V-0/0.8 mm rating was reported for PBT/GF₃₀ with the aid of a ternary system consisting of Al(H₂PO₂)₃, melamine cyanurate and polycarbonate as a charring agent with 10 wt% , 10 wt% and 7.5 wt% loadings, respectively - see Yang et al. [Industrial & Engineering Chemistry Research 50, p. 11975-11981 (2011)]. Chen et al. [Polymer Degradation and Stability 97, p. 158-165 (2012)] reported that Al(H₂PO₂)₃ is able to secure UL 94 V-0/1.6 mm rating for PBT/GF₃₀ as a sole flame retardant additive at a concentration of 25% by weight. As to other metal hypophosphite salts, calcium hypophosphite Ca(H₂PO₂)₂ is mentioned in US 6,503,969 (in the name BASF) and WO 2012/113146 (in the name of Rhodia).

DE112006001824T5 relates to thin-walled, flame retardant compositions for electric or electronic applications.

There exists a need for a suitable system of flame retardants to effectively reduce the flammability of thin polyester parts, especially thin PBT/GF₃₀ parts, that is, where the thickness of the test specimen is 0.8 mm or less. We have now found that calcium hypophosphite in combination with bromine-containing polymers fulfill the UL 94 V-0 requirements for such thin PBT/GF₃₀-made parts used in electrical engineering and electronics applications (that is, UL 94 V-0/0.8 mm and preferably also UL 94 V-0/0.4 mm). Notably, polyesters such as PBT/GF₃₀ can be flame retarded with the aid of the aforementioned mixture even in the absence of antimony trioxide [Normally bromine-containing flame retardants are added to plastic polymers together with antimony trioxide, which functions synergistically to enhance the activity of the flame retardant, usually at about 2:1-5:1 weight ratio (calculated as the ratio between the concentrations of bromine supplied by the flame retardant and Sb₂O₃ in the polymer composition).

Another method used for evaluating the flammability of polyester compositions of the invention is based on measuring their Glow Wire Ignition Temperature (GWIT). GWIT is the lowest temperature at which material ignites and burns for longer than 5 seconds under the glow wire test (IEC 60695-2-13 standard). For some preferred polyester compositions of the invention the GWIT measured was above 800°C, and even above 850°C (GWIT > 870°C, e.g., from 870-900°C (for plate test thickness of 3 mm)).

The polyester compositions of the invention were also investigated to determine their electrical properties by measuring their resistance to exposure of voltage. This property is quantified using the Comparative Tracking Index (CTI), which is a measure of the susceptibility of solid insulating materials to surface tracking when exposed to an electrolyte under the application of voltage. CTI indicates the voltage which causes the sample to undergo carbonization. The higher the CTI, the better is the resistance of the sample to electrical discharge etc. The experimental results reported below indicate that compositions of the invention possess acceptable CTI, above 400 V, e.g., above 420 V, for example, from 430 to 600 V, e.g., from 500 to 600 V (when measured according to IEC 60112 with standard "Solution A"; see below).

The present invention is therefore primarily directed to a composition comprising poly(butylene terephthalate) and a mixture of flame retardants having at least the following two components:
A) calcium hypophosphite and B) bromine-containing polymer selected from the group consisting of i) poly(pentabromobenzyl acrylate) and ii) brominated polystyrene.

The composition of the invention is substantially Sb₂O₃-free. By "substantially Sb₂O₃-free" is meant that the concentration of antimony trioxide in the composition is well below the acceptable amount used in plastic composites in conjunction with halogenated additives, e.g., not more 1.0% by weight, more preferably, up 0.5% by weight, e.g., 0.0-0.3% by weight (based on the total weight of the composition). Most preferably, the compositions of the invention are totally devoid of antimony trioxide.

The concentration of the mixture of flame retardants in the polyester composition is preferably from 10 to 30% by weight, more specifically from 15 to 25% by weight, for example 17 to 23% by weight based on the total weight of the composition, and the mixture is proportioned such that the ratio between the weight concentrations of bromine (supplied by the brominated additive) and calcium hypophosphite is preferably not less than 1:1, e.g., from 1.05 to 2.0, e.g., from 1.05 to 1.8 (in favor of bromine). The concentration of bromine in the polyester composition is calculated by multiplying the bromine content of the flame retardant (designated herein Br _{Fr name} and expressed as wt%) by the weight concentration of that flame retardant in the polyester composition, as illustrated below.

The first component of the additive mixture is calcium hypophosphite. This salt is available on the market from various manufacturers. The salt can be prepared by the reaction of calcium carbonate or oxide with H₃PO₂, followed by evaporation of the solvent and recovery of the salt (see Encyclopedia of the Alkaline Earth Compounds by R. C. Ropp; 2013 Elsevier). Other methods are described in US 2,938,770, based on the treatment of sodium hydroxide with an ion exchange resin. Production of calcium hypophosphite is also described in CN 101332982.

The second component of the additive mixture is a bromine-containing polymer. Different types of bromine-containing polymers can be used in combination with Ca(H₂PO₂)₂ according to the present invention, for example:
i) Poly (pentabromobenzyl acrylate), represented by the following formula: 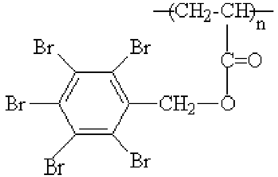 (n=degree of polymerization)

The polymer (abbreviated PBBPA) is produced by polymerizing the corresponding monomer pentabromobenzyl acrylate, either in bulk (in an extruder at a temperature in the range from 120°C to 290°C as described in US 4,996,276), or in solution, see US 4,128,709 or 6,028,156. The polymer is also available on the market, being sold by ICL-IP (FR-1025) or
ii) Brominated polystyrene, represented by the following formula: 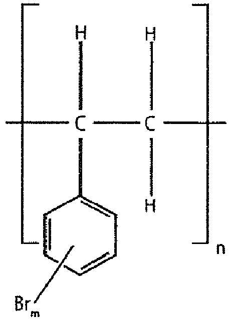 (n=degree of polymerization; m= 1,2,3,4 or 5).

The polymer is prepared by methods known in the art (see US 4,879,353 and US 5,532,322). Suitable grades have weight average molecular weight in the range of about 500,000-600,000, with bromine content preferably exceeding 60 or even 65 % by weight (that is, average of 2-3 bromine atoms per aromatic ring in the polymer backbone chain). Such polymers, in the form of a free flowing powder or in granular form, are available on the market, e.g., from ICL-IP (FR 803P).

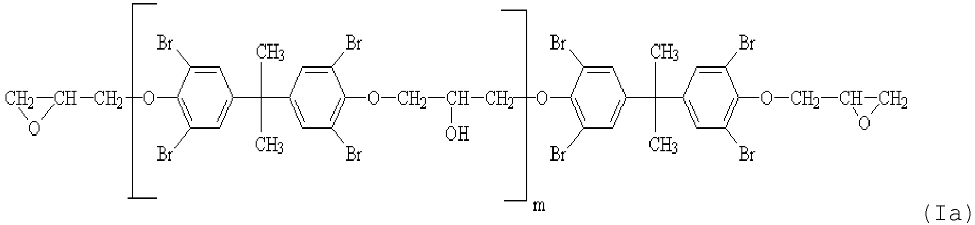

The composition of the invention comprises not less than 10% by weight, e.g., from 20 to 70% by weight and preferably from 20 to 60% by weight of a thermoplastic poly(butylene terephthalate) (PBT) (e.g., 35-55%).

PBT is available from various manufacturers, e.g., BASF and Ticona. For example, the melt flow index of the PBT (MFI; ISO 1133 250°C/2.16 kg) may vary from 25 g/10 min to 50 g/10 min, e.g., from 20 to 35 g/10 min or from 35 to 50 g/10 min.

The composition of the invention preferably comprises reinforcing filler, especially glass fibers, which are usually pre-coated by manufacturers in order to improve their compatibility with poly(butylene terephthalate). The major constituents of glass fibers applied for reinforcing polyester intended for use in electrical devices are alumino-borosilicates; such type of glass in known as E-glass. The glass fibers comprise filaments with diameter in the range from 1µ to 30µ, and are applied in the form of chopped strands with length in the range from 2 to 10 mm, e.g., from 3 to 4.5 mm. The concentration of the glass fibers is usually from 5% to 40% by weight, e.g., from 10 to 40% by weight, preferably at least 20% by weight, e.g. from 20 to 35% by weight, in particular from 24 to 35% by weight and especially from 27 to 33% by weight, i.e., around 30% by weight, based on the total weight of the composition. The preferred compositions of the invention are therefore designated PBT/GF₂₀₋₃₅, PBT/GF₂₄₋₃₅ and PBT/GF₂₇₋₃₃, in particular, the aforementioned PBT/GF₃₀.

The invention specifically provides a composition comprising:
from 20 to 60% by weight of a polyester (e.g., 35-55%), in particular polyalkylene terephthalate, and especially polybutylene terephthalate (PBT);
from 20 to 35% by weight of a reinforcing filler, in particular glass fibers (e.g., 24-35% and especially 27-33%); and
a mixture of flame retardants comprising calcium hypophosphite and bromine-containing polymer selected from the group consisting of poly (pentabromobenzyl acrylate), brominated polystyrene and brominated epoxy resin of Formula (Ia), wherein the concentration of said calcium hypophosphite is preferably in the range from 5% to 10% (e.g., 6 to 9%) by weight based on the total weight of the composition, and the concentration of the bromine-containing polymer is adjusted such that the bromine concentration of the composition is from 7.0 to 12% (e.g., 8 to 11%) by weight based on the total weight of the composition.

The concentration of bromine in the composition is calculated by multiplying the bromine content of a given flame retardant (designated herein Br _{Fr name} and expressed as % by weight) by the weight concentration of that flame retardant in the composition. For example, the bromine contents of commercially available FR-1025, FR-803P and F-2100 are Br _{FP-1025} = 71%, Br _{FR-803P} = 66% and Br _{F-2100} = 52%, respectively. Therefore, to incorporate 10% by weight bromine into the polyester composition, the corresponding concentrations of these three flame retardants should be 14.1%, 15.1% and 19.3% (by weight relative to the total weight of the composition).

The compositions according to the present invention also include one or more anti-dripping agents such as polytetrafluoroethylene (abbreviated PTFE) in a preferred amount between 0.1 and 1.0 wt%, more preferably between 0.3 and 0.7 wt%, and even more preferably between 0.3 and 0.5 wt%, based on the total weight of the composition. PTFE is described, for example, in US 6,503,988.

For example, compositions comprising:
from 40 to 55 % by weight of PBT (e.g., 45 to 55%), from 20 to 35 % by weight of glass fibers (e.g., 27 to 33%), from 5 to 10% (e.g., 6 to 9%) by weight of Ca(H₂PO₂)₂, from 12 to 15% by weight of poly (pentabromobenzyl acrylate) and from 0.1 to 1.0 % (e.g., 0.3 to 0.7%) by weight of PTFE; or
from 40 to 55 % by weight of PBT (e.g., 45 to 55%), from 20 to 35 % by weight of glass fibers (e.g., 27 to 33%), from 5 to 10% by weight of Ca(H₂PO₂)₂ (e.g., 6 to 9%), from 12 to 18% by weight of brominated polystyrene and from 0.1 to 1.0 % by weight of PTFE (e.g., 0.3 to 0.7%); or
from 40 to 50 % by weight of PBT (e.g., 40 to 45%), from 20 to 35 % by weight of glass fibers (e.g., 27 to 33%), from 5 to 10% by weight of Ca(H₂PO₂)₂ (e.g., 6 to 9%), from 15 to 20% by weight of brominated epoxy resin of Formula (I) or (Ia) and 0.1 to 1.0 % by weight of PTFE (e.g., from 0.3 to 0.7%);
were found to possess the desired flammability properties, that is, fulfilling the requirements for UL 94 V-0/0.8 mm rating (and in some cases also UL 94 V-0/0.4 mm rating).

Hence, preferred compositions are characterized in that they achieve a UL-94 flammability test rating of V-0 at a thickness equal to 0.8mm, and when tested in accordance with IEC 60112 standard using 0.1% by weight NH₄Cl solution and platinum electrodes, the comparative tracking index (CTI) measured is 400 V or more, as mentioned above.

In general, good results are obtained when the mixture of flame retardants used consists solely of calcium hypophosphite and a bromine-containing polymer, devoid of other flame retardants. But in some embodiments, one or more auxiliary flame retardants may be added to the composition, in particular, phosphorouscontaining flame retardants, e.g., phosphate esters.

For example, an aryl phosphate ester of hydroquinone (1,4-dihydroxybenzene) of Formula (II): 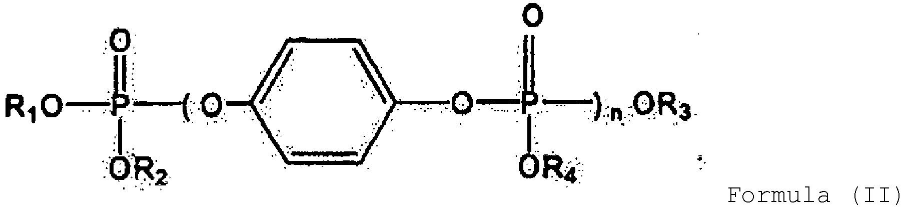 wherein R¹, R², R³ and R⁴ each independently is aryl (e.g., phenyl) or alkyl-substituted aryl (e.g., xylenyl), optionally interrupted with heteroatoms, and n has an average value of from about 1.0 to about 2.0, may be used. The compounds of Formula (II) are described in EP 2089402. In general, the hydroquinone bis-phosphates of Formula II are prepared by reacting a diaryl halophosphate with hydroquinone in the presence of a catalyst. For example, diphenylchlorophosphate (DPCP) is reacted with hydroquinone in the presence of MgCl₂ to produce hydroquinone bis-(diphenyl phosphate). Detailed methods for synthesizing compounds of Formula (II) can be found in EP 2089402. One preferred compound of Formula (II) to be used in this invention has R₁=R₂=R₃=R4₌phenyl and 1.0<n≤1.1, that is, hydroquinone bis(diphenyl phosphate) with an n average value of about 1.0<n≤1.05. The compound is obtainable in a solid form, see Example 1 of EP 2089402. Hereinafter it is named "HDP" for the purpose of simplicity. It is available on the market from ICL-IP in the form of pastilles; the pastilles, when compounded with thermoplastics, avoid various handling problems as well as impart improved thermal properties, such as resin flow.

Another phosphate ester flame retardant that can be added to the polyester composition of the invention is resorcinol bis (diphenyl phosphate), which is a liquid bis-phosphate available from ICL-IP (CAS no.: 57583-54-7; Fyrolflex^{®} RDP). Hereinafter it is named "RDP" for the purpose of simplicity.

Phosphate ester flame retardants such as HDP or RDP can be used to replace part of the amount Ca(H₂PO₂)₂ in the polyester compositions of the invention, namely, in PBT/GF, e.g., to modify mechanical properties. For example, when the bromine-containing polymer is added in amount sufficient to supply 10% by weight bromine content in PBT/GF, then either combination of Ca(H₂PO₂)₂ and HDP {indicated [Ca(H₂PO₂)₂ + HDP]}, or a combination of Ca(H₂PO₂)₂ and RDP {indicated [Ca(H₂PO₂)₂ + RDP]}, can be added at a total concentration from 5 to 10% based on the total weight of the composition. The weight ratio Ca(H₂PO₂)₂ : HDP and likewise the weight ratio Ca(H₂PO₂)₂ : RDP can be from 5:1 to 1:5, e.g., from 1:1 to 1:3. An illustrative composition of this embodiment of the invention is a composition comprising from 40 to 55 % by weight of PBT, from 20 to 35 % by weight of glass fibers (e.g., 27 to 33%), from 12 to 15% by weight of bromine-containing polymer such as poly (pentabromobenzyl acrylate); from 5 to 10% (e.g., 6-9%) by weight of [Ca(H₂PO₂)₂ + HDP/RDP)] and from 0.1 to 1.0% by weight of PTFE (e.g., 0.3-0.7%).

Apart from a polyester, a reinforcing filler, a mixture of flame retardants and an anti-dripping agent, the composition of this invention may further contain conventional additives, such as UV stabilizers (e.g., benzotriazole derivative), processing aids, antioxidants (e.g., hindered phenol type), lubricants, pigments, dies and the like. The total concentration of these auxiliary additives is typically not more than 3 % by weight.

The preparation of the polyester compositions of the invention may be carried out using different methods known in the art. For example, the polyester compositions are produced by melt-mixing the components, e.g., in a co-kneader or twin screw extruder, wherein the mixing temperature is in the range from 220 to 280°C. It is possible to feed all the ingredients to the extrusion throat together, but it is generally preferred to first dry-mix some of the components, and then to introduce the dry blend into the main feed port of the extruder, with one or more of the ingredients being optionally added downstream. For example, the polyester, calcium hypophosphite, the bromine containing flame retardant, one or more of the conventional additives are dry blended and the blend is fed to the extruder throat, followed by the addition of glass fibers downstream. Process parameters such as barrel temperature, melt temperature and screw speed are described in more detail in the examples that follow.

The resultant extrudates are comminuted into pellets. The dried pellets are suitable for feed to an article shaping process, injection molding, extrusion molding, compression molding, optionally followed by another shaping method. Articles molded from the poly(butylene terephthalate) compositions form another aspect of the invention. Specific examples of articles include electric and electronic parts, such as connectors, circuit breakers and power plugs.

The binary mixture consisting of calcium hypophosphite and a bromine-containing polymer was shown to be effective in reducing the flammability of polyesters, such as PBT/GF₂₀₋₃₅ compositions, providing compositions having good electrical properties. Another aspect of the invention is therefore a method for preparing flame-retarded PBT/GF (e.g., PBT/GF₂₀₋₃₅) compositions, comprising processing (e.g., by melt-mixing in an extruder) PBT, glass fibers, calcium hypophosphite and bromine-containing polymer and additives as set out above, to form a PBT/GF composition with CTI above 400 V and UL 94 V-0/0.8-0.4 mm rating.

Hence, the invention also provides a method of reducing the flammability and improving the comparative tracking index (CTI) of glass-fiber reinforced poly(butylene terephthalate) composition, comprising adding an amount of bromine-containing polymer and an amount of calcium hypophosphite to the composition, wherein the composition is substantially Sb₂O₃free. As indicated above, the amount of the bromine-containing polymer is preferably adjusted such that the bromine content of the composition is from 7.0 to 12% by weight based on the total weight of the composition, and the amount of calcium hypophosphite is preferably adjusted such that its concentration is from 5 to 10% by weight based on the total weight of the composition, wherein the composition is devoid of Sb₂O₃. Preferably, the bromine-containing polymer is poly (pentabromobenzyl acrylate) or brominated polystyrene. The method is especially adapted to produce a composition comprising from 40 to 55 % by weight of PBT, from 20 to 35 % by weight of glass fibers, from 5 to 10% by weight of Ca(H₂PO₂)₂, from 12 to 15% by weight of poly (pentabromobenzyl acrylate) or from 12 to 18% by weight brominated polystyrene, and from 0.1 to 1.0% by weight of polytetrafluoroethylene, based on the total weight of the composition; such that the composition achieves a UL-94 flammability test rating of V-0 at a thickness equal to 0.8 mm, and when tested in accordance with IEC 60112 standard using 0.1% by weight NH₄Cl solution and platinum electrodes, the comparative tracking index (CTI) measured is 400 V or more, e.g., greater than 420 V, for example, from 430 to 600 V, e.g., from 500 to 600 V.

### Examples

### Materials and methods

The materials used for preparing the PBT/GF₃₀ formulations are tabulated in Table 1 (FR is abbreviation of flame retardant):

**Table 1**

| Component (manufacturer) | GENERAL DESCRIPTION | FUNCTION |
|---|---|---|
| PBT Celanex^{®} 2500 (Ticona) | Poly butylene terephthalate | Plastic matrix |
| PBT 4520 (BASF) | Poly butylene terephthalate | Plastic matrix |
| GFR for PBT (polyram) | Glass fibers | Reinforcing agent |
| FR-1025 (ICL-IP) | Poly (pentabromobenyzl acrylate) | Brominated polymer FR |
| FR-803P (ICL-IP) | Brominated polystyrene | Brominated polymer FR |
| F-2100 (ICL-IP) | Brominated epoxy resin | Brominated polymer FR |
| FR-1410 (ICL-IP) | Decabromodiphenyl ethane | Non-polymeric brominated FR |
| Ca(H₂PO₂)₂ (Sigma Aldrich); (Hubei Sky Lake Chemical) | Calcium hypophosphite | FR |
| Al(H₂PO₂)₃ (Hubei Sky) | Aluminum hypophosphite | FR |
| HDP (Example 1 of EP 2089402; also available ICL-IP) | hydroquinone bis(diphenyl phosphate) | FR |
| RDP (ICL-IP) | Resorcinol bis(diphenyl phosphate) | FR |
| ATO M-0112 (Kafrit) | Antimony trioxide (masterbatch, 80% w/w Sb₂O₃ content) | FR-synergist |
| Hostaflon^{®} 2711 (Dyneon) | PTFE (Teflon) | Anti-dripping agent |
| Irganox^{®} 1010 (BASF) | Multifunctional, nitrogen-containing, Hindered phenol | Antioxidant& heat stabilizer |

### Flammability properties

A direct flame test was carried out according to the Underwriters-Laboratories standard UL 94 in a gas methane operated flammability hood, applying the vertical burn on specimens of 0.8 mm or 0.4 mm thickness.

Glow Wire Ignition Temperature (GWIT) was measured according to the IEC EN 60695-2-13 method. The instrument used was the PLT Glow Wire test instrument with pulse timer type T-03-24 (3 mm thick plate).

### Mechanical properties

The Notched Izod impact test was carried out according to ASTM D256-81 using Instron Ceast 9050 pendulum impact system. Tensile properties were determined according to ASTM D638 using Zwick 1435 material testing machine (type 2 dumbbells were used, with a speed test of 5 mm/min).

### Thermal properties

Heat distortion temperature (abbreviated HDT; this is the temperature at which a polymer sample deforms under a specific load) was measured according to ASTM D-648 with load of 1820 MPa and heating rate of 120°C/hour. The instrument was HDT/VICAT -plus Daveport, Lloyd instruments.

### Electrical properties

Comparative Tracking Index (CTI) was measured according to the International Electrotechnical Commission (IEC) STANDARD publication 112 (DIN EN 60112). The test was performed with a solution of NH₄Cl 0.1% (solution A) and Pt electrodes.

### Examples 1 (reference), 2 (comparative), 3 (of the invention) and 4 (comparative)

### PBT/GF₃₀ flame retarded with calcium hypophosphite and bromine-containing polymer

In this set of examples, combinations consisting of either aluminum hypophosphite or calcium hypophosphite with poly (pentabromobenyzl acrylate) were tested to determine their ability to reduce the flammability of PBT/GF₃₀ in the absence of antimony trioxide. Test specimens with thickness of 0.8 mm or 0.4 mm were prepared. In addition, mechanical, thermal and electrical properties were also measured. In the reference Example 1, a conventional recipe based on poly (pentabromobenyzl acrylate) and antimony trioxide was used. In comparative Example 4, non-polymeric brominated flame retardant was tested.

To prepare the compositions, PBT and additives (with the exception of the brominated FR and glass fibers) were premixed and the blend was fed via Feeder no. 1 into the main port of a twin-screw co-rotating extruder ZE25 with L/D=32 (Berstorff). The brominated FR was fed via Feeder no. 2 to the extruder main port. The glass fibers were added downstream, via Feeder no. 3 to the fifth zone of the barrel through a lateral feeder. Operating parameters of the extruder were as follows:
Barrel temperature (from feed end to discharge end): 220_{°}C, 250°C, 260°C, 260°C, 260°C, 265°C, 270°C, die - 275°C.
Screw rotation speed: 350 rpm
Feeding rate: 12 kg/hour.

The strands produced were pelletized in a pelletizer 750/3 from Accrapak Systems Ltd. The resultant pellets were dried in a circulating air oven (Heraeus Instruments) at 120⁰C for 4 hours. The dried pellets were injection molded into test specimens using Allrounder 500-150 from Arburg under the conditions tabulated below:

**Table 2**

| PARAMETER | Set values |
|---|---|
| T₁ (Feeding zone) | 230⁰C |
| T₂ | 240⁰C |
| T₃ | 240⁰C |
| T₄ | 250⁰C |
| T₅ (nozzle) | 265°C |
| Mold temperature | 70⁰C |
| Injection pressure | 1000 bar |
| Holding pressure | 850 bar |
| Back pressure | 10 bar |
| Holding time | 10s |
| Cooling time | 15s |
| Mold closing force | 500kN |
| Filling volume (portion) | 35 ccm |
| Injection speed | 25 ccm/sec |

Specimens of various thicknesses were prepared. The test specimens were conditioned for one week at 23°C, and were then subjected to the several tests to determine their properties. The compositions and the results are set out in Table 3.

**Table 3**

| Example | Example 1 (reference) | Example 2 (comparative) | Example 3 | Example 4 (comparative) |
|---|---|---|---|---|
| **Composition** | | | | |
| PBT (Celanex 2500)(wt%) | -52 | -48 | -48 | -50 |
| Glass fibers (wt%) | 30 | 30 | 30 | 30 |
| FR-1025 (wt%) (bromine, calculated) | 11.3 (8) | 14.1 (10) | 14.1 (10) | |
| ATO M-0112 (wt%) (Sb₂O₃ wt%, calculated) | 6.3 (5) | | | |
| FR-1410 (bromine, calculated) | | | | 12.2 (10) |
| Al(H₂PO₂)₃ (wt%) | | 7.5 | | |
| Ca(H₂PO₂)₂ (wt%) | | | 7.5 | 7.5 |
| PTFE (wt%) | 0.3 | 0.5 | 0.5 | 0.5 |
| Irganox 1010 (wt%) | 0.2 | 0.2 | 0.2 | 0.2 |

| **Flammability** | | | | |
|---|---|---|---|---|
| UL 94V 0.8mm | V-0 | V-0 | V-0 | V-2 |
| UL 94V 0.4mm | V-0 | V-0 | V-2 | V-2 |
| GWIT (°C) | 750 | 900 | 900 | ND |

| **Mechanical properties** | | | | |
|---|---|---|---|---|
| Izod notched impact(J/m) | 77 | 49 | 60 | ND |
| Tensile modulus (MPa) | 11,567 | 13,293 | 13,535 | ND |
| Tensile strength (MPa) | 125 | 109 | 115 | ND |
| Elongation at break (%) | 3% | 2% | 2% | ND |

| **Thermal properties** | | | | |
|---|---|---|---|---|
| HDT (°C) | 200 | 202 | 199 | ND |

| **Electrical properties** | | | | |
|---|---|---|---|---|
| CTI (V) | 275 | 250 | 450 | ND |

The results set out in Table 3 indicate the high efficacy of a combination consisting of a metal hypophosphite salt and poly (pentabromobenyzl acrylate) in reducing the flammability of thin PBT/GF₃₀ test specimens, achieving UL 94 V-0/0.8mm rating and high GWIT values. Additionally, PBT/GF₃₀ flame retarded with a metal hypophosphite and poly (pentabromobenyzl acrylate) displays fairly good mechanical and thermal properties. Notably, poly (pentabromobenyzl acrylate)/calcium hypophosphite mixture emerges as a useful flame retarded additive in PBT/GF₃₀, seeing that the formulation exhibits high CTI.

On the other hand, a non-polymeric bromine-containing flame retardant tested (FR-1410; decabromodiphenyl ethane, a flame retardant containing 82% aromatic bromine, which is considered the additive of choice for a large variety of applications, including PBT) was shown to be unsuitable, seeing that the combination FR-1410/calcium hypophosphite failed to gain UL 94 V-0/0.8mm rating. It appears that in the case of decabromodiphenyl ethane, calcium hypophosphite is unable to offset the absence of antimony trioxide.

### Examples 5 - 9

### PBT/GF₃₀ flame retarded with calcium hypophosphite and bromine-containing polymer

As shown in this set of examples, apart from poly (pentabromobenyzl acrylate), other bromine-containing polymers available in the market can be combined with calcium hypophosphite to achieve PBT/GF₃₀ compositions that are UL 94 V-0/0.8-0.4 mm rated.

To prepare the compositions, PBT and the additives as set out in Table 4 below were fed into a twin-screw extruder under processing conditions described in the previous set of Examples to produce 0.8mm and 0.4mm thick test specimens. Specimens were then tested to determine fire behavior, mechanical, thermal and/or electrical properties. Compositions and results are tabulated below.

**Table 4**

| Example | Example 5 | Example 6 | Example 7 (reference) | Example 8 (reference) | Example 9 |
|---|---|---|---|---|---|
| **Composition** | | | | | |
| PBT (Celanex 2500)(wt%) | -50 | -47 | -46 | -43 | |
| PBT (BASF 4520) (wt%) | | | | | -47 |
| Glass fibers (wt%) | 30 | 30 | 30 | 30 | 30 |
| Ca(H₂PO₂)₂ (wt%) | 7.5 | 7.5 | 7.5 | 7.5 | 7.5 |
| FR-803P (wt%) (bromine wt%, calculated) | 12.1 (8) | 15.2 (10) | | | 15.2 (10) |
| F-2100 (wt%) (bromine, calculated) | | | 15.4 (8) | 19.2 (10) | |
| PTFE (wt%) | 0.5 | 0.5 | 0.5 | 0.5 | 0.5 |
| Irganox 1010 (wt%) | 0.2 | 0.2 | 0.2 | 0.2 | 0.2 |

| **Flammability** | | | | | |
|---|---|---|---|---|---|
| UL 94V 0.8mm | V-1 | V-0 | V-0 | V-0 | ND |
| UL 94V 0.4mm | V-0 | V-0 | V-2 | V-0 | ND |
| GWIT (°C) | 750 | 775 | 900 | 900 | ND |

| **Mechanical properties** | | | | | |
|---|---|---|---|---|---|
| Izod notched impact (J/m) | 75 | 72 | 71 | 73 | ND |
| Tensile modulus (MPa) | 10666 | 11347 | 11686 | 12635 | ND |
| Tensile strength (MPa) | 116 | 114 | 136 | 138 | ND |
| Elongation at break (%) | 3.5 | 3.3 | 3.2 | 2.9 | ND |

| **Thermal properties** | | | | | |
|---|---|---|---|---|---|
| HDT (°C) I | 197 | 194 | 192 | 180 | ND |

| **Electrical properties** | | | | | |
|---|---|---|---|---|---|
| CTI (V) | | 525 | | | 600 |

### Examples 10 - 11

### PBT/GF₃₀ flame retarded with bromine-containing polymer, calcium hypophosphite and phosphate ester

In this set of examples, the bromine-containing polymer was applied in conjunction with calcium hypophosphite and phosphate ester flame retardant. Two types of the phosphate ester flame retardants were tested: HDP, available from ICL-IP as free flowing solid pastilles, and RDP, available from ICL-IP as clear transparent liquid (Fyrolflex^{™} RDP). RDP can be used as is in compounding processes, e.g., by feeding the liquid into an extruder through a downstream port using a pump. However, in the experiments reported herein, RDP was first formulated into masterbatch pellets in PBT as carrier; the so-formed pellets were subsequently employed to prepare the compositions of the invention via compounding in a co-rotating twin-screw extruder, with test specimens produced by injection molding, as described in previous examples. Compositions and test results are set out in Table 5.

**Table 5**

| Example | Example 10 | Example 11 |
|---|---|---|
| **Composition** | | |
| PBT (Celanex 2500) (wt%) | -48 | -12 |
| Glass fibers (wt%) | 30 | 30 |
| FR-1025 (wt%) (bromine, calculated) | 14.1 (10) | 14.1 (10) |
| Ca(H₂PO₂)₂ (wt%) | 2.5 | 2.5 |
| HDP | 5.0 | |
| RDP as masterbatch in PBT, 12.5% wt RDP (RDP, calculated) | | 40.7 (5) |
| PTFE (wt%) | 0.5 | 0.5 |
| Irganox 1010 (wt%) | 0.2 | 0.2 |

| **Flammability** | | |
|---|---|---|
| UL 94V 1.6mm | V-0 | V-0 |
| UL 94V 0.8mm | V-0 | V-0 |
| UL 94V 0.4mm | V-2 | V-2 |

| **Mechanical properties** | | |
|---|---|---|
| Izod notched impact (J/m) | 57 | 64 |
| Tensile modulus (MPa) | 13243 | 10856 |
| Tensile strength (MPa) | 99 | 111 |
| Elongation at break (%) | 3.0 | 3.5 |

| **Thermal properties** | | |
|---|---|---|
| HDT (°C) | 191 | 194 |

## Claims

1. A composition comprising poly(butylene terephthalate) (PBT) and a mixture of flame retardants having at least the following two components:
calcium hypophosphite and bromine-containing polymer selected from the group consisting of:
i) poly (pentabromobenzyl acrylate); and
ii) brominated polystyrene.

2. A composition according to claim 1, which is free of antimony trioxide.

3. A composition according to any one of the preceding claims, which further comprises reinforcing filler.

4. A composition according to claim 3, wherein the reinforcing filler comprises glass fibers, with the concentration of the glass fibers in the composition being from 10 to 40% by weight, based on the total weight of the composition,
the composition preferably comprising PBT reinforced with glass fibers at a concentration of 20 to 35 by wt% based on the total weight of the composition.

5. A composition according to any one of the claims 1 to 4, comprising PBT, glass fibers, calcium hypophosphite, poly (pentabromobenzyl acrylate) and polytetrafluoroethylene,
the composition preferably comprising from 40 to 55 % by weight of PBT, from 20 to 35 % by weight of glass fibers, from 5 to 10% by weight of Ca(H₂PO₂)₂, from 12 to 15% by weight of poly (pentabromobenzyl acrylate) and from 0.1 to 1.0% by weight of polytetrafluoroethylene, based on the total weight of the composition.

6. A composition according to any one of claims 1 to 4, comprising PBT, glass fibers, calcium hypophosphite, brominated polystyrene and polytetrafluoroethylene,
the composition preferably comprising from 40 to 55 % by weight of PBT, from 20 to 35 % by weight of glass fibers, from 5 to 10% by weight of Ca(H₂PO₂)₂, from 12 to 18% by weight of brominated polystyrene and from 0.1 to 1.0% by weight of polytetrafluoroethylene, based on the total weight of the composition.

7. A composition according to any one of the preceding claims, **characterized in that** it achieves a UL-94 flammability test rating of V-0 at a thickness equal to 0.8mm, and when tested in accordance with IEC 60112 standard using 0.1% by weight NH₄Cl solution and platinum electrodes, the comparative tracking index (CTI) measured is 420 V or more.

8. A composition according to claim 7, wherein the CTI is from 500 to 600 V.

9. A method of reducing the flammability and improving the comparative tracking index (CTI) of glass-fiber reinforced poly(butylene terephthalate) composition, comprising adding an amount of bromine-containing polymer selected from the group consisting of poly (pentabromobenzyl acrylate) and brominated polystyrene and an amount of calcium hypophosphite to the composition, wherein the composition is Sb₂O₃-free.

10. A method according to claim 9, wherein the amount of the bromine-containing polymer is adjusted such that the bromine content of the composition is from 7.0 to 12% by weight based on the total weight of the composition, and the amount of calcium hypophosphite is adjusted such that its concentration is from 5 to 10% by weight based on the total weight of the composition.

11. A method according to claim 10, such that the composition comprises from 40 to 55 % by weight of PBT, from 20 to 35 % by weight of glass fibers, from 5 to 10% by weight of Ca(H₂PO₂)₂, from 12 to 15% by weight of poly (pentabromobenzyl acrylate) and from 0.1 to 1.0% by weight of polytetrafluoroethylene, based on the total weight of the composition.

12. A method according to claim 10, such that the composition comprises from 40 to 55 % by weight of PBT, from 20 to 35 % by weight of glass fibers, from 5 to 10% by weight of Ca(H₂PO₂)₂, from 12 to 18% by weight of brominated polystyrene and from 0.1 to 1.0% by weight of polytetrafluoroethylene, based on the total weight of the composition.

13. A method according to any one of claims 9 to 12, such that the composition achieves a UL-94 flammability test rating of V-0 at a thickness equal to 0.8mm, and when tested in accordance with IEC 60112 standard using 0.1% by weight NH₄Cl solution and platinum electrodes, the comparative tracking index (CTI) measured is 420 V or more.

14. A method according to claim 13, wherein the CTI is from 500 to 600 V.

15. An article molded from the composition of any one of the claims 1 to 8.

## Patentansprüche

1. Zusammensetzung umfassend Poly(butylenterephthalat) (PBT) und eine Mischung von Flammschutzmitteln mit mindestens den folgenden zwei Komponenten:
Calciumhypophosphit und bromhaltiges Polymer, ausgewählt aus der Gruppe bestehend aus:
i) Poly(pentabrombenzylacrylat); und
ii) bromiertes Polystyrol.

2. Zusammensetzung nach Anspruch 1, die frei von Antimontrioxid ist.

3. Zusammensetzung nach einem der vorstehenden Ansprüche, die ferner verstärkenden Füllstoff enthält.

4. Zusammensetzung nach Anspruch 3, wobei der verstärkende Füllstoff Glasfasern umfasst, wobei die Konzentration der Glasfasern in der Zusammensetzung 10 bis 40 Gew.-%, bezogen auf das Gesamtgewicht der Zusammensetzung, beträgt,
wobei die Zusammensetzung vorzugsweise mit Glasfasern verstärktes PBT in einer Konzentration von 20 bis 35 Gew.%, bezogen auf das Gesamtgewicht der Zusammensetzung, umfasst.

5. Zusammensetzung nach einem der Ansprüche 1 bis 4 umfassend PBT, Glasfasern, Calciumhypophosphit, Poly(pentabrombenzylacrylat) und Polytetrafluorethylen, wobei die Zusammensetzung vorzugsweise von 40 bis 55 Gew.% PBT, von 20 bis 35 Gew.-% Glasfasern, von 5 bis 10 Gew.% Ca(H₂PO₂)₂, von 12 bis 15 Gew.-% Poly(pentabrombenzylacrylat) und von 0,1 bis 1,0 Gew.-% Polytetrafluorethylen, bezogen auf das Gesamtgewicht der Zusammensetzung, umfasst.

6. Zusammensetzung nach einem der Ansprüche 1 bis 4 umfassend PBT, Glasfasern, Calciumhypophosphit, bromiertes Polystyrol und Polytetrafluorethylen,
wobei die Zusammensetzung vorzugsweise von 40 bis 55 Gew.% PBT, von 20 bis 35 Gew.-% Glasfasern, von 5 bis 10 Gew.% Ca(H₂PO₂)₂, von 12 bis 18 Gew.-% bromiertes Polystyrol und von 0,1 bis 1,0 Gew.-% Polytetrafluorethylen, bezogen auf das Gesamtgewicht der Zusammensetzung, umfasst.

7. Zusammensetzung nach einem der vorstehenden Ansprüche, **dadurch gekennzeichnet, dass** sie eine UL-94-Entflammbarkeits-Testbewertung von V-0 bei einer Dicke gleich zu 0,8 mm erreicht, und wenn gemäß der Norm IEC 60112 unter Verwendung von 0,1 Gew.-% NH₄Cl-Lösung und Platinelektroden getestet wird, die gemessene Vergleichszahl der Kriechwegbildung (CTI) 420 V oder mehr beträgt.

8. Zusammensetzung nach Anspruch 7, wobei die CTI von 500 bis 600 V beträgt.

9. Verfahren zur Verringerung der Entflammbarkeit und zur Verbesserung der Vergleichszahl der Kriechwegbildung (CTI) einer glasfaserverstärkten Poly(butylenterephthalat)-Zusammensetzung, umfassend die Zugabe einer Menge eines bromhaltigen Polymers, ausgewählt aus der Gruppe bestehend aus Poly(pentabrombenzylacrylat) und bromiertem Polystyrol, und einer Menge an Calciumhypophosphit zu der Zusammensetzung, wobei die Zusammensetzung Sb₂O₃-frei ist.

10. Verfahren nach Anspruch 9, wobei die Menge des bromhaltigen Polymers eingestellt wird, so dass der Bromgehalt der Zusammensetzung von 7,0 bis 12 Gew.-%, bezogen auf das Gesamtgewicht der Zusammensetzung, beträgt, und die Menge an Calciumhypophosphit eingestellt wird, so dass ihre Konzentration von 5 bis 10 Gew.-%, bezogen auf das Gesamtgewicht der Zusammensetzung, beträgt.

11. Verfahren nach Anspruch 10, so dass die Zusammensetzung von 40 bis 55 Gew.-% PBT, von 20 bis 35 Gew.-% Glasfasern, von 5 bis 10 Gew.-% Ca(H₂PO₂)₂, von 12 bis 15 Gew.-% Poly(pentabrombenzylacrylat) und von 0,1 bis 1,0 Gew.-% Polytetrafluorethylen, bezogen auf das Gesamtgewicht der Zusammensetzung, enthält.

12. Verfahren nach Anspruch 10, so dass die Zusammensetzung von 40 bis 55 Gew.-% PBT, von 20 bis 35 Gew.-% Glasfasern, von 5 bis 10 Gew.-% Ca(H₂PO₂)₂, von 12 bis 18 Gew.-% bromiertes Polystyrol und von 0,1 bis 1,0 Gew.-% Polytetrafluorethylen, bezogen auf das Gesamtgewicht der Zusammensetzung, umfasst.

13. Verfahren nach einem der Ansprüche 9 bis 12, so dass die Zusammensetzung bei einer Dicke gleich zu 0,8 mm eine Entflammbarkeits-Testbewertung nach UL-94 von V-0 erreicht, und wenn gemäß der Norm IEC 60112 unter Verwendung einer 0,1 Gew.-% NH₄Cl-Lösung und Platinelektroden getestet wird, die gemessene Vergleichszahl der Kriechwegbildung (CTI) 420 V oder mehr beträgt.

14. Verfahren nach Anspruch 13, wobei die CTI von 500 bis 600 V beträgt.

15. Artikel, der aus der Zusammensetzung nach einem der Ansprüche 1 bis 8 geformt ist.

## Revendications

1. Composition comprenant du poly(téréphtalate de butylène) (PBT) et un mélange d'agents ignifuges ayant au moins les deux composants suivants :
de l'hypophosphite de calcium et un polymère contenant du brome choisi dans le groupe constitué par :
i) le poly(acrylate de pentabromobenzyle) ; et
ii) le polystyrène bromé.

2. Composition selon la revendication 1, qui est exempte de trioxyde d'antimoine.

3. Composition selon l'une quelconque des revendications précédentes, qui comprend en outre une charge de renforcement.

4. Composition selon la revendication 3, dans laquelle la charge de renforcement comprend des fibres de verre, la concentration des fibres de verre dans la composition étant de 10 à 40 % en poids, par rapport au poids total de la composition,
la composition comprenant de préférence du PBT renforcé par des fibres de verre à une concentration de 20 à 35 % en poids par rapport au poids total de la composition.

5. Composition selon l'une quelconque des revendications 1 à 4, comprenant du PBT, des fibres de verre, de l'hypophosphite de calcium, du poly(acrylate de pentabromobenzyle) et
du polytétrafluoroéthylène, la composition comprenant de préférence de 40 à 55 % en poids de PBT, de 20 à 35 % en poids de fibres de verre, de 5 à 10 % en poids de Ca(H₂PO₂)₂, de 12 à 15% en poids de poly(acrylate de pentabromobenzyle) et de 0,1 à 1,0 % en poids de polytétrafluoroéthylène, par rapport au poids total de la composition.

6. Composition selon l'une quelconque des revendications 1 à 4, comprenant du PBT, des fibres de verre, de l'hypophosphite de calcium, du polystyrène bromé et du polytétrafluoroéthylène, la composition comprenant de préférence de 40 à 55 % en poids de PBT, de 20 à 35 % en poids de fibres de verre, de 5 à 10 % en poids de Ca(H₂PO₂)₂, de 12 à 18 % en poids de polystyrène bromé et de 0,1 à 1,0 % en poids de polytétrafluoroéthylène, par rapport au poids total de la composition.

7. Composition selon l'une quelconque des revendications précédentes, **caractérisée en ce qu'**elle atteint une cote de test d'inflammabilité UL-94 de V-0 à une épaisseur égale à 0,8 mm, et lorsqu'elle est testée conformément à la norme IEC 60112 en utilisant une solution de NH₄Cl à 0,1 % en poids et des électrodes de platine, l'indice de résistance au cheminement (IRC) mesuré est de 420 V ou plus.

8. Composition selon la revendication 7, dans laquelle l'IRC est de 500 à 600 V.

9. Procédé de réduction de l'inflammabilité et d'amélioration de l'indice de résistance au cheminement (IRC) d'une composition de poly(téréphtalate de butylène) renforcée par des fibres de verre, comprenant l'ajout d'une quantité de polymère contenant du brome choisi dans le groupe constitué par le poly(acrylate de pentabromobenzyle) et le polystyrène bromé et d'une quantité d'hypophosphite de calcium à la composition, dans lequel la composition est exempte de Sb₂O₃

10. Procédé selon la revendication 9, dans lequel la quantité du polymère contenant du brome est ajustée de telle sorte que la teneur en brome de la composition est de 7,0 à 12 % en poids par rapport au poids total de la composition, et la quantité d'hypophosphite de calcium est ajustée de telle sorte que sa concentration est de 5 à 10 % en poids par rapport au poids total de la composition.

11. Procédé selon la revendication 10, tel que la composition comprend de 40 à 55 % en poids de PBT, de 20 à 35 % en poids de fibres de verre, de 5 à 10 % en poids de Ca(H₂PO₂)₂, de 12 à 15 % en poids de poly(acrylate de pentabromobenzyle) et de 0,1 à 1,0 % en poids de polytétrafluoroéthylène, par rapport au poids total de la composition.

12. Procédé selon la revendication 10, tel que la composition comprend de 40 à 55 % en poids de PBT, de 20 à 35 % en poids de fibres de verre, de 5 à 10 % en poids de Ca(H₂PO₂)₂, de 12 à 18 % en poids de polystyrène bromé et de 0,1 à 1,0 % en poids de polytétrafluoroéthylène, par rapport au poids total de la composition.

13. Procédé selon l'une quelconque des revendications 9 à 12, tel que la composition atteint une cote de test d'inflammabilité UL-94 de V-0 à une épaisseur égale à 0,8 mm, et lorsqu'elle est testée conformément à la norme IEC 60112 en utilisant une solution de NH₄Cl à 0,1 % en poids et des électrodes de platine, l'indice de résistance au cheminement (IRC) mesuré est de 420 V ou plus.

14. Procédé selon la revendication 13, dans lequel l'IRC est de 500 à 600 V.

15. Article moulé à partir de la composition selon l'une quelconque des revendications 1 à 8.
